# FASCICULE DE BREVET EUROPEEN

(11) **EP 4 395 614 B1**
(45) Date de publication et mention de la délivrance du brevet: **06.08.2025**
(21) Numéro de dépôt: 22785761.2
(22) Date de dépôt: 02.09.2022
(51) Int. Cl.: A47J 36/02, B32B 7/06, B32B 15/04, B32B 27/32

(54) **ELEMENT DE CUISSON REVETU PAR UN FILM POLYMERIQUE FLUORE ANTIADHESIF PELABLE**
KOCHELEMENT MIT EINER ABZIEHBAREN ANTIHAFT-FLUORPOLYMERFOLIE
COOKING ELEMENT COATED WITH A PEELABLE NON-STICK FLUORINATED POLYMERIC FILM

(30) Priorité: 03.09.2021 FR 2109237
(43) Date de publication de la demande: 10.07.2024
(73) Titulaire: SEB S.A., 69130 Ecully (FR)
(72) Inventeur: ALLEMAND, Simon, 69134 Ecully CEDEX (FR); RUBIO, Martin, 69134 Ecully CEDEX (FR)
(74) Mandataire: Regimbeau
(86) Numéro de dépôt international: PCT/FR2022/051657
(87) Numéro de publication internationale: WO 2023/031565

(56) Documents cités:
- WO-A1-2018/005109
- WO-A2-2016/161233
- FR-A1- 2 979 214

## Description

### DOMAINE DE L'INVENTION

La présente invention concerne le domaine des éléments de cuisson revêtus par un film polymérique fluoré antiadhésif pelable.

La présente invention concerne également les articles culinaires et les appareils électriques de cuisson comportant un tel élément de cuisson.

### ETAT DE LA TECHNIQUE

Dans l'industrie des articles culinaires comportant une surface de cuisson antiadhésive, les performances du revêtement constituent l'une des préoccupations les plus importantes.

En particulier, la durabilité mécanique des revêtements à base de résine thermostable, notamment à base de polytétrafluoroéthylène (PTFE), est essentielle. Cette durabilité est généralement évaluée par l'apparition de rayures au métal et de l'usure du revêtement qui se traduit par une perte d'antiadhésivité.

Face aux sollicitations mécaniques inhérentes à l'utilisation de l'article, une perte des propriétés mécaniques du revêtement est observée et une délamination du revêtement peut également se produire.

Il est donc important de développer des revêtements présentant une grande durabilité, mais offrant aussi la possibilité, une fois l'article culinaire trop usé, de désassembler ledit revêtement de son substrat afin de procéder au recyclage du revêtement et du substrat métallique ou de permettre la réalisation d'un nouveau revêtement permettant de prolonger la durée de vie de l'article culinaire.

De manière conventionnelle, un substrat métallique est d'abord mis en forme pour constituer un ustensile de cuisine, puis la surface intérieure de l'ustensile de cuisine est revêtue d'une résine fluorée ayant une excellente résistance à la chaleur telle que le polytétrafluoroéthylène (PTFE) ou le tétrafluoroéthylène-perfluoroalkyl vinyl éther (PFA) au moyen d'un procédé de revêtement par pulvérisation liquide ou un procédé de revêtement par poudre. Une alternative constitue à revêtir le substrat puis à mettre en forme le substrat ainsi revêtu.

WO2016161233 décrit un article comprenant un substrat métallique revêtu d'un revêtement fluoré multicouches ayant une première couche d'un polymère fluoré en contact avec le substrat métallique et une seconde couche fluorée déposée au-dessus de la première couche, cette seconde couche pouvant être déposée par pulvérisation liquide.

Le procédé de revêtement par pulvérisation liquide présente un certain nombre d'inconvénients, en particulier concernant l'épaisseur du revêtement.

Lorsque le substrat métallique présente une forme incurvée, il est difficile d'obtenir un revêtement d'épaisseur uniforme.

D'autre part, l'épaisseur de revêtement est limitée. Des craquelures sont susceptibles d'apparaître lorsque l'épaisseur du revêtement est trop importante.

La durabilité de l'anti-adhésivité et de la résistance à l'usure est donc limitée par l'épaisseur du revêtement pouvant être obtenu selon ce procédé.

Le procédé de revêtement par poudre présente lui aussi des inconvénients. Le revêtement obtenu présente des défauts, de type tête d'épingle, pouvant conduire à une diminution du caractère antiadhésif.

Afin de pallier les inconvénients mentionnés ci-dessus, l'état de la technique décrit des substrats métalliques revêtus de films fluorés par laminage.

La demande KR20160099388 décrit le procédé d'obtention d'un substrat métallique revêtu d'un film fluoré (dépourvu d'une couche de primaire comprenant un composé organique ou d'un adhésif). Le film fluoré est un film multicouches obtenu par dépôt successif sur un support d'une dispersion aqueuse des constituants de la couche (résine fluorée et éventuellement une charge inorganique) qui est séchée et frittée. Le film multicouches est ensuite ôté de son support et positionné sur le substrat métallique avant assemblage. La couche du film fluoré en contact avec le métal est constituée de FEP, PFA, TFM, MFA (ou d'un mélange) qui a de bonnes propriétés d'écoulement, permettant ainsi une bonne adhésion. L'assemblage substrat métallique / film fluoré est réalisé par compression thermique, dans une presse en statique ou bien entre des rouleaux (procédé roll-to-roll).

Si le procédé d'obtention d'un substrat revêtu par laminage d'un film fluoré offre la possibilité d'avoir un film antiadhésif plus épais, donc plus résistant, les propriétés mécaniques d'un tel film ne sont toutefois pas optimales.

En outre, le désassemblage par pelage d'un tel film, une fois usé, est difficile. Les propriétés mécaniques du film peuvent être altérées, les couches supérieures pouvant être endommagées. La cohésion mécanique entre les différentes couches n'est alors plus suffisante pour permettre un retrait du film multicouche sans qu'il ne se déchire.

L'art antérieur décrit d'autres modes d'assemblage d'un film fluoré sur un substrat.

La demande CN206950019 décrit une poêle antiadhésive comprenant une couche antiadhésive disposée sur la surface interne de l'ustensile de cuisson. La couche antiadhésive est préférentiellement constituée de PTFE et peut être fixée par collage (bonding), mais aussi par incrustation (embedding) or par rivetage (riveting). Le film assemblé par incrustation ne peut pas être retiré facilement. Si le rivetage peut permettre de désassembler le film et le substrat, cette option est toutefois peu adaptée aux articles culinaires.

Les feuilles de cuisson amovibles peuvent constituer une solution à la problématique du recyclage de revêtements de cuisson antiadhésifs mais leur usage n'est pas adapté à la grande majorité des articles culinaires.

### EXPOSE DE L'INVENTION

D'un point de vue industriel, reste le besoin de développer des revêtements pour article culinaire plus performants en termes de durabilité du caractère antiadhésif et de la résistance à l'usure et qui peuvent être facilement désassemblés du substrat métallique de l'article culinaire afin d'être recyclés ou de permettre la réalisation d'un nouveau revêtement permettant de prolonger la durée de vie de l'article culinaire.

Il est donc devenu nécessaire de développer un substrat métallique revêtu d'un film antiadhésif ayant des propriétés mécaniques renforcées, le substrat métallique et le film pouvant être en outre facilement désassemblés lorsque le revêtement est usé.

La demanderesse a ainsi mis au point un élément de cuisson comprenant un substrat métallique revêtu d'un film polymérique fluoré antiadhésif pelable renforcé au moyen d'une couche de renfort de nature minérale, métallique ou polymérique. Ledit film est assemblé audit substrat par l'intermédiaire d'une couche polymérique thermofusible permettant, par pelage à chaud, un désassemblage facile du film, tout particulièrement lorsque le revêtement est usé.

### Résumé de l'invention

Un premier objet de l'invention concerne un élément de cuisson revêtu (1) pour article culinaire ou appareil électrique de cuisson, comportant un substrat métallique (2) revêtu sur une face (2a) par un film pelable (3) formant une face de cuisson (5), le film pelable (3) comprenant une ou plusieurs couches de polymère(s) fluoré(s) (7), une couche de renfort mécanique (6) et une couche de polymère(s) thermofusible(s) (4) agencée du côté opposé à la face de cuisson (5) et ayant un point de fusion supérieur à 250°C et inférieur ou égal à celui d'au moins une des autres couches du film pelable (3), ledit film pelable (3) étant assemblé avec le substrat métallique (2), ladite couche de polymère(s) thermofusible(s) (4) étant en contact avec la face (2a) du substrat métallique (2).

Un autre objet de l'invention concerne un élément de cuisson revêtu (1) pour article culinaire ou appareil électrique de cuisson, comportant un substrat métallique (2) revêtu sur une face (2a) par un film pelable (3) formant une face de cuisson (5), le film pelable (3) comprenant une ou plusieurs couches de polymère(s) fluoré(s) (7), une couche de renfort mécanique (6) et une couche de polymère(s) thermofusible(s) (4) agencée du côté opposé à la face de cuisson (5) et ayant un point de fusion supérieur à 250°C et inférieur à celui des autres couches du film pelable (3), ledit film pelable (3) étant assemblé avec le substrat métallique (2), ladite couche de polymère(s) thermofusible(s) (4) étant en contact avec la face (2a) du substrat métallique (2).

Un autre objet de l'invention concerne un procédé de fabrication d'un élément de cuisson revêtu (1) selon l'invention comprenant les étapes suivantes :
i. Fourniture d'un substrat métallique (2),
ii. Eventuellement, traitement préalable de la face (2a) dudit substrat métallique (2) destinée à être revêtue,
iii. Fourniture d'un film pelable (3) comprenant une ou plusieurs couches de polymère(s) fluoré(s) (7), une couche de renfort mécanique (6) et une couche de polymère(s) thermofusible(s) (4),
iv. Positionnement de la couche de polymère(s) thermofusible(s) (4) du film pelable (3) sur la face (2a) du substrat métallique (2),
v. Réalisation de l'assemblage dudit substrat métallique (2) et de la couche de polymère(s) thermofusible(s) (4) du film pelable (3) par pressage à chaud.

Un autre objet de l'invention concerne un article culinaire ou un appareil électrique de cuisson comprenant un élément de cuisson revêtu (1) selon l'invention.

### Définitions

Par le terme « film », il faut comprendre au sens de la présente invention un ensemble constitué d'une ou de plusieurs couches superposées destiné à être assemblé avec le substrat métallique. Le terme « film » correspond également audit ensemble une fois assemblé avec le substrat métallique.

Par le terme « couche », il faut comprendre au sens de la présente invention une couche continue ou une couche discontinue. Une couche continue (ou également appelée couche monolithique) est un tout unique formant un aplat total recouvrant complètement la surface sur laquelle elle est posée ou va être posée. Une couche discontinue (ou couche non monolithique) peut comprendre plusieurs parties n'étant pas ainsi un tout unique.

Par « pelable », s'entend au sens de la présente invention du film pelable (3) préalablement assemblé au substrat métallique (2) et qui peut être détaché du substrat métallique (2) après avoir été chauffé entre 250°C et 350°C pendant quelques minutes.

Par « polymère thermofusible », s'entend au sens de la présente invention d'un polymère perdant toute tenue mécanique à des températures supérieures à son point de fusion.

Par « alliage d'aluminium », s'entend au sens de la présente invention un alliage d'aluminium de série 1000, 2000, 3000, 4000, 5000, 6000, 7000 et 8000.

Par l'expression « article culinaire », il faut comprendre au sens de la présente invention un objet destiné à cuisiner. Pour ce faire, il est destiné à être chauffé pour cuire ou réchauffer les aliments portés par l'élément de cuisson ou contenus dans l'élément de cuisson.

Par l'expression « objet destiné à être chauffé pour cuire ou réchauffer les aliments portés par l'élément de cuisson ou contenus dans l'élément de cuisson », il faut comprendre au sens de la présente invention un objet qui sera chauffé par un système extérieur de chauffage tel qu'un foyer de cuisson, un tel objet pouvant notamment être une poêle, une casserole, une sauteuse, un wok, une grille de barbecue, et qui est apte à transmettre l'énergie calorifique apportée par ce système extérieur de chauffage à un matériau ou aliment au contact dudit objet.

Par l'expression « appareil électrique de cuisson », il faut comprendre au sens de la présente invention un objet destiné à cuisiner. Pour ce faire, il est configuré pour produire de la chaleur.

Par l'expression « objet configuré pour produire de la chaleur », il faut comprendre au sens de la présente invention un objet chauffant possédant son propre système de chauffage.

### DESCRIPTION DES FIGURES

[Fig. 1] représente une vue en coupe d'un exemple de réalisation d'un élément de cuisson revêtu (1) selon l'invention, comportant un film pelable (3) et un substrat métallique (2).
[Fig. 2] représente une vue en coupe du substrat métallique (2) et du film pelable (3) avant assemblage métallurgique.
[Fig. 3] représente une vue en 3 dimensions d'un exemple de réalisation d'un élément de cuisson revêtu (1) selon l'invention, comportant un film pelable (3) et un substrat métallique (2), le film pelable (3) se prolongeant par une languette (8) non associée au substrat métallique.
[Fig. 4] illustre un élément de cuisson revêtu (1) selon l'invention formant un récipient de cuisson.
[Fig. 5] illustre un article culinaire (100) comportant un élément de cuisson revêtu (1) selon la Figure 4.
[Fig. 6] illustre un appareil électrique de cuisson (200) comportant un élément de cuisson revêtu (1) selon la Figure 4.

### DESCRIPTION DETAILLEE DE L'INVENTION

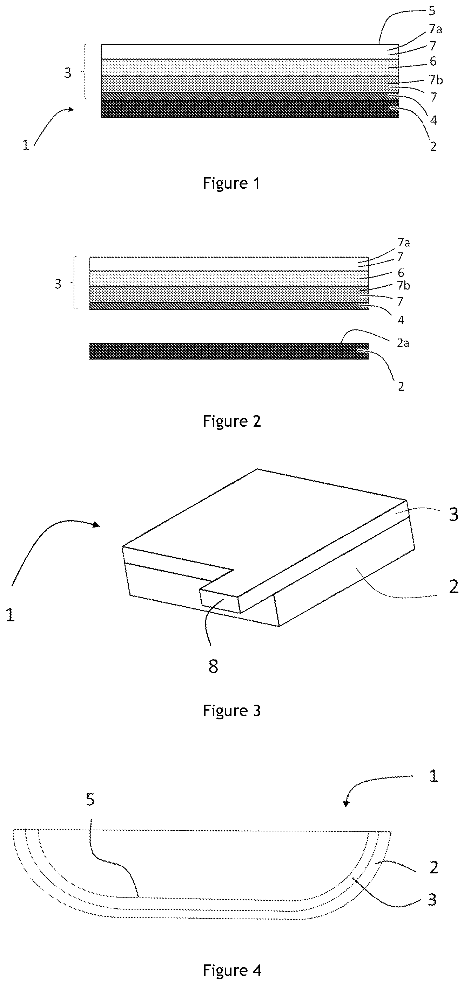

Comme illustré sur les Figures 1 à 4, un premier objet de l'invention concerne un élément de cuisson revêtu (1) pour article culinaire ou appareil électrique de cuisson, comportant un substrat métallique (2) revêtu sur une face (2a) par un film pelable (3) formant une face de cuisson (5), le film pelable (3) comprenant une ou plusieurs couches de polymère(s) fluoré(s) (7), une couche de renfort mécanique (6) et une couche de polymère(s) thermofusible(s) (4) agencée du côté opposé à la face de cuisson (5) et ayant un point de fusion supérieur à 250°C et inférieur ou égal à celui d'au moins une des autres couches du film pelable (3), ledit film pelable (3) étant assemblé avec le substrat métallique (2), ladite couche de polymère(s) thermofusible(s) (4) étant en contact avec la face (2a) du substrat métallique (2).

Avantageusement, la couche de polymère(s) thermofusible(s) (4) agencée du côté opposé à la face de cuisson (5) a un point de fusion inférieur ou égal à celui des autres couches du film pelable (3).

Avantageusement, la couche de polymère(s) thermofusible(s) (4) agencée du côté opposé à la face de cuisson (5) a un point de fusion inférieur à celui d'au moins une des autres couches du film pelable (3).

Avantageusement la couche de polymère(s) thermofusible(s) (4) agencée du côté opposé à la face de cuisson (5) a un point de fusion inférieur à celui des autres couches du film pelable (3).

A titre de substrats métalliques utilisables dans le cadre de l'invention, on peut avantageusement citer les substrats en aluminium, en acier inoxydable, en fonte de fer ou d'aluminium, ou en titane ou en cuivre.

Par aluminium au sens de la présente invention s'entend d'un métal constitué à 100% d'aluminium ou d'un alliage d'aluminium.

Selon un mode de réalisation, le substrat métallique (2) est un substrat en aluminium, en acier inoxydable ou un substrat métallique multicouches. Le substrat métallique peut être un substrat métallique multicouches, notamment bicouches ou tri-couches, constituées de différents métaux comme de l'acier, de l'acier inoxydable, de l'aluminium, du magnésium, du cuivre ou du titane, ces multicouches pouvant être obtenues par exemple par colaminage, par frappe à chaud ou à froid, ou par diffusion à chaud sous charge (solid state bonding).

De préférence, le substrat métallique (2) comprend une alternance de couches en métal et/ou en alliage métallique, ou est une calotte d'aluminium de fonderie, d'aluminium ou d'alliages d'aluminium doublée d'un fond extérieur en acier inoxydable.

De façon générale, le film pelable (3) couvre en totalité la face (2a) du substrat métallique (2), mais il peut être envisagé que seule une partie du substrat métallique (2) soit recouverte.

La surface du substrat métallique (2) peut être traitée préalablement à l'assemblage du film pelable (3) de façon à augmenter sa surface spécifique et améliorer ainsi l'adhérence du film : ce traitement peut être une attaque chimique, un brossage, un sablage, un grenaillage, un traitement physicochimique de type plasma ou corona ou laser, une activation chimique ou une combinaison de ces différentes techniques.

Selon un mode de réalisation, la face (2a) du substrat métallique (2) a subi un traitement de surface préalablement à l'assemblage du film pelable (3) avec la face (2a) du substrat métallique (2).

Le traitement de surface de la face (2a) est choisi parmi une attaque chimique, un brossage, un sablage, un grenaillage, un traitement physicochimique de type plasma ou corona ou laser, une activation chimique ou une combinaison de ces différentes techniques.

L'adhésion sur un substrat métallique d'un film fluoré présente des difficultés techniques du fait du caractère antiadhésif intrinsèque des polymères fluorés : une des solutions consiste à utiliser une sous-couche de colle thermofusible permettant ainsi d'améliorer l'adhésion du film fluoré sur le substrat métallique.

Le film pelable (3) de l'élément de cuisson revêtu (1) selon l'invention comporte une couche de polymère(s) thermofusible(s) (4) agencée du côté opposé à la face de cuisson (5), ladite couche ayant un point de fusion supérieur à 250°C et inférieur à celui des autres couches du film pelable (3).

Cela permet à ladite couche de polymère(s) thermofusible(s) (4) de maintenir une bonne tenue mécanique avec le substrat à température ambiante et jusqu'à une température normale d'utilisation d'une surface de cuisson, soit 250°C environ. Pour des températures supérieures à environ 250°C, la diminution des propriétés mécaniques de la couche de polymère(s) thermofusible(s) (4) permet le désassemblage par pelage du film pelable (3) en entier.

Selon un mode de réalisation, le(s) polymère(s) thermofusible(s) de la couche de polymère(s) thermofusible(s) (4) sont choisis parmi les fluoropolymères et les silicones.

De façon préférée, le(s) polymère(s) thermofusible(s) de la couche de polymère(s) thermofusible(s) (4) sont choisis parmi les copolymères de tétrafluoroéthylène et de perfluoropropylvinyléther (PFA), les copolymères de tétrafluoroéthylène et d'hexafluoropropylène (FEP), les copolymères de tétrafluoroéthylène et de perfluoromethylvinylether (MFA), et leurs mélanges.

La couche de polymère(s) thermofusible(s) (4) est aisément différentiable du substrat métallique (2) par observations en coupe au microscope électronique à balayage (MEB) ou par spectroscopie infrarouge.

L'épaisseur de la couche de polymère(s) thermofusible(s) (4) du film pelable (3) de l'élément de cuisson revêtu (1) selon l'invention, c'est-à-dire mesurée sur l'élément de cuisson une fois qu'il a été revêtu par le film pelable (3), est comprise entre 1µm et 100µm, de préférence entre 5µm et 50µm.

La mesure de l'épaisseur de la couche de polymère(s) thermofusible(s) (4) est réalisée en 20 points aléatoires sur la coupe du film pelable (3). L'épaisseur moyenne de la couche de polymère(s) thermofusible(s) (4) est obtenue en faisant la moyenne de ces 20 mesures.

Le film pelable (3) peut comporter parmi les couches de polymère(s) fluoré(s) (7) au moins une autre couche de polymère(s) thermofusible(s), si désiré de même composition que la couche de polymère(s) thermofusible(s) (4), ladite autre couche de polymère(s) thermofusible(s) étant de préférence agencée entre la couche de renfort mécanique (6) et la face de cuisson (5), par exemple entre la couche de renfort mécanique (6) et la ou l'une des couche(s) de polymère(s) fluoré(s) (7).

Afin d'une part d'améliorer la durabilité du film pelable (3) et d'autre part de permettre un désassemblage dudit film pelable (3) par pelage, le film pelable (3) comprend une couche de renfort mécanique (6).

La couche de renfort mécanique (6) permet d'améliorer la durabilité de l'anti-adhésivité et de la résistance à la rayure du film pelable (3).

En outre, en l'absence de couche de renfort mécanique (6), le désassemblage par pelage d'un tel film, une fois usé, est difficile. Les propriétés mécaniques du film peuvent être altérées, les couches supérieures pouvant être endommagées. La cohésion mécanique entre les différentes couches n'est alors plus suffisante pour permettre un retrait du film multicouche sans qu'il ne se déchire. En présence de la couche de renfort mécanique (6), même si les couches supérieures du film pelable (3) sont endommagées, le film pelable (3) peut être retiré dans son intégralité par pelage plus facilement.

La couche de renfort mécanique (6) comprend un renfort minéral, un renfort métallique ou un polymère non fluoré à propriétés thermomécaniques élevées.

La couche de renfort mécanique (6) peut être une couche continue ou une couche non continue.

Selon un mode de réalisation, le renfort minéral de la couche de renfort mécanique (6) est choisi parmi les fibres de verre, les matières ou tissus de fibres de verre, les fibres de carbone et les matières ou tissus de fibres de carbone.

Selon un autre mode de réalisation, le renfort métallique de la couche de renfort mécanique (6) est un élément métallique non continu. Il peut s'agir de métal déployé, de métal perforé ou bien d'un grillage. Dans tous les cas, le renfort métallique n'est pas une couche continue.

Selon un mode de réalisation, le polymère non fluoré à propriétés thermomécaniques élevées de la couche de renfort mécanique (6) est choisi parmi les polyaryléthercétones (PEAK), comme par exemple le polyétheréthercétone (PEEK), et les polyamide-imides (PAI).

Le polymère non fluoré à propriétés thermomécaniques élevées de la couche de renfort mécanique (6) peut se présenter sous la forme d'une couche continue, sous la forme d'une couche non continue comportant des trous ou sous la forme d'un renfort unidirectionnel de type fibres utilisé en tissé ou en non tissé.

Selon un autre mode de réalisation, la couche de renfort mécanique (6) comprend en outre un polymère imprégnant et recouvrant en intégralité ledit renfort.

Selon un mode de réalisation, la couche de renfort mécanique (6) est constituée d'un renfort minéral, d'un renfort métallique ou d'un polymère non fluoré à propriétés thermomécaniques élevées.

Selon un mode de réalisation, le film pelable (3) de l'élément de cuisson revêtu (1) selon l'invention comprend une couche unique de polymère(s) fluoré(s) (7).

Selon un autre mode de réalisation, le film pelable (3) de l'élément de cuisson revêtu (1) selon l'invention comprend plusieurs couches de polymère(s) fluoré(s) (7), lesdites couches pouvant être de composition différente.

Selon un autre mode de réalisation, le film pelable (3) de l'élément de cuisson revêtu (1) selon l'invention comprend plusieurs couches de polymère(s) fluoré(s) (7), lesdites couches étant de même composition.

Avantageusement, le polymère fluoré ou le mélange de polymères fluorés de la ou des couches de polymère(s) fluoré(s) (7) du film pelable (3) est choisi dans le groupe comprenant le polytétrafluoroéthylène (PTFE), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), et leurs mélanges.

L'épaisseur de la ou des couches de polymère(s) fluoré(s) (7) dudit film pelable (3) de l'élément de cuisson revêtu (1) selon l'invention est comprise entre 10 et 400 µm, de préférence entre 30 et 250 µm, de manière particulièrement préférée entre 50 et 200 µm.

La mesure de l'épaisseur de la ou des couches de polymère(s) fluoré(s) (7) du film pelable (3) de l'élément de cuisson revêtu (1) selon l'invention, c'est-à-dire mesurée sur l'élément une fois qu'il a été revêtu par le film pelable (3), est réalisée en 20 points aléatoires sur la coupe du film. L'épaisseur moyenne de la couche métallique est obtenue en faisant la moyenne de ces 20 mesures.

Selon un mode de réalisation, le film pelable (3) de l'élément de cuisson revêtu (1) selon l'invention comprend une couche (7a) de polymère(s) fluoré(s) formant la face de cuisson (5).

Avantageusement, le(s) polymère(s) fluoré(s) de la couche (7a) est(sont) choisi(s) dans le groupe comprenant le polytétrafluoroéthylène (PTFE), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), et leurs mélanges.

De manière avantageuse, le polymère fluoré ou le mélange de polymères fluorés de la ou des couches de polymère(s) fluoré(s) (7) du film pelable (3) est choisi parmi le polytétrafluoroéthylène (PTFE) et les mélanges comprenant le polytétrafluoroéthylène (PTFE) et un ou plusieurs polymères fluorés choisis parmi les copolymères de tétrafluoroéthylène et de polyméthylvinyléther (MVA) et les terpolymères de tétrafluoroéthylène, de polyméthylvinyléther et de fluoroalkylvinyléther (TFE/PMVE/FAVE).

Le film pelable (3) de l'élément de cuisson revêtu (1) selon l'invention peut également comprendre au moins une charge.

Au titre de charges utilisables au titre de la présente invention, on peut notamment citer les oxydes métalliques, les carbures métalliques, les oxy-nitrures métalliques, les nitrures métalliques, les silices et leurs mélanges.

Dans l'exemple de réalisation illustré sur les Figures 1 et 2, le film pelable (3) comporte 2 couches de polymère(s) fluoré(s) (7a et 7b) et une couche de renfort mécanique (6).

L'épaisseur totale du film pelable (3) de l'élément de cuisson revêtu (1) selon l'invention, c'est-à-dire mesurée sur l'élément de cuisson une fois qu'il a été revêtu par le film (3), est comprise entre 10µm et 500µm, de préférence entre 30µm et 300µm, de manière particulièrement préférée entre 50µm et 200µm.

La mesure de l'épaisseur du film pelable (3) de l'élément de cuisson revêtu (1) selon l'invention est réalisée en 20 points aléatoires sur la coupe du film. L'épaisseur moyenne de la couche métallique est obtenue en faisant la moyenne de ces 20 mesures.

Selon un mode de réalisation illustré sur la Figure 3, le film pelable (3) se prolonge par une languette (8) non associée au substrat métallique (2), ladite languette (8) facilitant la préhension dudit film pelable (3) pour l'opération de désassemblage par pelage.

Le film pelable (3) avant assemblage avec le substrat métallique (2) peut être obtenu par dépôt d'une première couche sur un support, puis éventuellement par le dépôt successif des autres couches, puis par exfoliation dudit film pour le séparer du support. Les couches du film pelable (3) peuvent également être assemblées entre elles par tout autre procédé d'assemblage, comme par laminage par exemple.

L'épaisseur de la couche de polymère(s) thermofusible(s) (4) du film pelable (3) avant assemblage avec le substrat métallique (2) est comprise entre 1 µm et 100 µm, de préférence entre 5 µm et 50 µm.

L'épaisseur de la ou des couches de polymère(s) fluoré(s) (7) du film pelable (3) avant assemblage avec le substrat métallique (2) est comprise entre 10 et 400 µm, de préférence entre 30 et 250 µm, de manière particulièrement préférée entre 50 et 200 µm.

L'épaisseur totale du film pelable (3) avant assemblage avec le substrat métallique (2) est comprise entre 10 µm et 500 µm, de préférence entre 30 µm et 300 µm, de manière particulièrement préférée entre 50 µm et 200 µm.

Un autre objet de l'invention concerne un procédé de fabrication d'un élément de cuisson revêtu (1) selon l'invention comprenant les étapes suivantes :
i. Fourniture d'un substrat métallique (2),
ii. Eventuellement, traitement préalable de la face (2a) dudit substrat métallique (2) destinée à être revêtue,
iii. Fourniture d'un film pelable (3) comprenant une ou plusieurs couches de polymère(s) fluoré(s) (7), une couche de renfort mécanique (6) et une couche de polymère(s) thermofusible(s) (4),
iv. Positionnement de la couche de polymère(s) thermofusible(s) (4) du film pelable (3) sur la face (2a) du substrat métallique (2),
v. Réalisation de l'assemblage dudit substrat métallique (2) et de la couche de polymère(s) thermofusible(s) (4) du film pelable (3) par pressage à chaud.

L'étape v. d'assemblage par pressage à chaud est réalisée à une température préférentiellement comprise entre 250°C et 350°C.

La Figure 4 illustre un élément de cuisson revêtu (1) selon l'invention formant un récipient de cuisson. Le film pelable (3) assemblé avec le substrat métallique (2) forme la face de cuisson (5) agencée à l'intérieur du récipient de cuisson.

Le procédé de pelage du film pelable (3) d'un élément de cuisson revêtu (1) selon l'invention comprend les étapes suivantes :
a) Chauffage de l'élément de cuisson à une température comprise entre 250°C et 350°C
b) Désassemblage par pelage du film pelable (3) et du substrat métallique (2), le cas échéant
au moyen de la languette (8) facilitant la préhension dudit film pelable (3).

L'étape a) de chauffage peut être réalisé au moyen de n'importe quel appareil générant de la chaleur, comme un four par exemple. Le temps de chauffage dépend de la taille de l'élément de cuisson à chauffer et est ajusté en conséquence.

Le désassemblage du film pelable (3) du substrat métallique (2) permet le recyclage du revêtement usé et facilite le recyclage du substrat métallique. Il offre aussi la possibilité d'assembler un nouveau revêtement permettant ainsi de prolonger la durée de vie de l'élément de cuisson revêtu (1).

La couche de polymère(s) thermofusible(s) (4) et la couche de renfort mécanique (6) permettent de désassembler facilement le film pelable (3) du substrat métallique (2). La couche de renfort mécanique (6) permet au film pelable (3) de rester cohésif lorsque la couche de polymère(s) thermofusible(s) (4) a atteint une température dépassant son point de fusion. Ainsi un effort peut être exercé sur le film pelable (3) pour le désassembler du substrat métallique (2). La fusion de la couche de polymère(s) thermofusible(s) (4) permet une décohésion avec le substrat métallique (2).

Un autre objet de l'invention concerne un article culinaire (100) comprenant un élément de cuisson revêtu (1) selon l'invention.

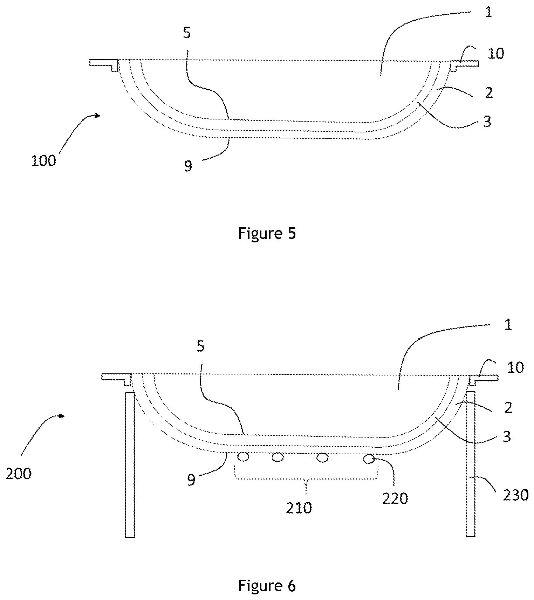

Selon un mode de réalisation illustré sur la Figure 5, l'article culinaire (100) selon l'invention comporte un élément de cuisson revêtu (1) formant récipient de cuisson et est équipé d'un organe de préhension (10) fixé sur ledit élément de cuisson revêtu (1). L'article culinaire (100) comporte une face de chauffe (9) destinée à être mise en contact avec une source de chauffage extérieure, la face de chauffe (9) étant opposée à la face de cuisson (5) destinée à être mise en contact avec les aliments lors de la cuisson.

L'article culinaire (100) selon l'invention est choisi dans le groupe constitué de casserole, poêle, poêlons ou caquelons pour fondue ou raclette, fait-tout, wok, sauteuse, crêpière, grill, plancha, marmite, cocotte, cuve de cuiseur ou de machine à pain, moule culinaire. Ainsi l'article culinaire (100) peut former un accessoire de cuisson pour un appareil électrique de cuisson.

Un autre objet de l'invention concerne un appareil électrique de cuisson (200) comprenant un élément de cuisson revêtu (1) selon l'invention.

Selon un autre mode de réalisation illustré sur la Figure 6, l'appareil électrique de cuisson (200) selon l'invention comporte un élément de cuisson revêtu (1) et une source de chauffage (210) configurée pour chauffer ledit élément de cuisson revêtu (1). L'élément de cuisson revêtu (1) formant récipient de cuisson est agencé dans une base chauffante (230) comportant la source de chauffage (210) composée de plusieurs éléments de chauffe (220). La face de chauffe (9) repose sur les éléments de chauffe (220). Si désiré, la face de chauffe (9) peut être solidaire des éléments de chauffe (220).

L'appareil électrique de cuisson (200) selon l'invention est choisi dans le groupe constitué de crêpière électrique, appareil électrique à raclette, appareil électrique à fondue, grill électrique, plancha électrique, cuiseur électrique, machine à pain.

## Revendications

1. Elément de cuisson revêtu (1) pour article culinaire ou appareil électrique de cuisson, comportant un substrat métallique (2) revêtu sur une face (2a) par un film pelable (3) formant une face de cuisson (5), le film pelable (3) comprenant une ou plusieurs couches de polymère(s) fluoré(s) (7), une couche de renfort mécanique (6) et une couche de polymère(s) thermofusible(s) (4) agencée du côté opposé à la face de cuisson (5) et ayant un point de fusion supérieur à 250°C et inférieur ou égal à celui d'au moins une des autres couches du film pelable (3), ledit film pelable (3) étant assemblé avec le substrat métallique (2), ladite couche de polymère(s) thermofusible(s) (4) étant en contact avec la face (2a) du substrat métallique (2).

2. Elément de cuisson revêtu (1) selon la revendication 1 **caractérisé en ce que** la couche de polymère(s) thermofusible(s) (4) agencée du côté opposé à la face de cuisson (5) a un point de fusion inférieur à celui des autres couches du film pelable (3).

3. Elément de cuisson revêtu (1) selon l'une quelconque des revendications précédentes **caractérisé en ce que** la couche de renfort mécanique (6) comprend un renfort minéral, un renfort métallique ou un polymère non fluoré à propriétés thermomécaniques élevées.

4. Elément de cuisson revêtu (1) selon la revendication 3 **caractérisé en ce que** le renfort minéral est choisi parmi les fibres de verre, les matières ou tissus de fibres de verre, les fibres de carbone et les matières ou tissus de fibres de carbone,
ou
**en ce que** le renfort métallique est un élément métallique non continu,
ou
**en ce que** le polymère non fluoré à propriétés thermomécaniques élevées est choisi parmi les polyaryléthercétones (PEAK) et les polyamide-imides (PAI).

5. Elément de cuisson revêtu (1) selon la revendication 4 **caractérisé en ce que** la couche de renfort mécanique (6) comprend en outre un polymère imprégnant et recouvrant en totalité ledit renfort.

6. Elément de cuisson revêtu (1) selon l'une quelconque des revendications précédentes **caractérisé en ce que** le(s) polymère(s) thermofusible(s) de la couche de polymère(s) thermofusible(s) (4) sont choisis parmi les fluoropolymères et les silicones.

7. Elément de cuisson revêtu (1) selon la revendication 6 **caractérisé en ce que** le(s) polymère(s) thermofusible(s) de la couche de polymère(s) thermofusible(s) (4) sont choisis parmi les copolymères de tétrafluoroéthylène et de perfluoropropylvinyléther (PFA), les copolymères de tétrafluoroéthylène et d'hexafluoropropylène (FEP), les copolymères de tétrafluoroéthylène et de perfluoromethylvinylether (MFA), et leurs mélanges.

8. Elément de cuisson revêtu (1) selon l'une quelconque des revendications précédentes **caractérisé en ce que** ledit film pelable (3) comprend une couche (7a) de polymère(s) fluoré(s) formant la face de cuisson (5).

9. Elément de cuisson revêtu (1) selon l'une quelconque des revendications précédentes **caractérisé en ce que** le polymère fluoré ou le mélange de polymères fluorés de la ou des couches de polymère(s) fluoré(s) (7) dudit film pelable (3) est choisi dans le groupe comprenant le polytétrafluoroéthylène (PTFE), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), et leurs mélanges.

10. Elément de cuisson revêtu (1) selon l'une quelconque des revendications précédentes **caractérisé en ce que** le film pelable (3) se prolonge par une languette (8) non associée au substrat métallique (2), ladite languette (8) facilitant la préhension dudit film pelable (3) pour l'opération de désassemblage par pelage

11. Procédé de fabrication d'un élément de cuisson revêtu (1) selon l'une quelconque des revendications précédentes comprenant les étapes suivantes :
i. Fourniture d'un substrat métallique (2),
ii. Eventuellement, traitement préalable de la face (2a) dudit substrat métallique (2) destinée à être revêtue,
iii. Fourniture d'un film pelable (3) comprenant une ou plusieurs couches de polymère(s) fluoré(s) (7), une couche de renfort mécanique (6) et une couche de polymère(s) thermofusible(s) (4),
iv. Positionnement de la couche de polymère(s) thermofusible(s) (4) du film pelable (3) sur la face (2a) du substrat métallique (2),
v. Réalisation de l'assemblage dudit substrat métallique (2) et de la couche de polymère(s) thermofusible(s) (4) du film pelable (3) par pressage à chaud.

12. Procédé de pelage du film pelable (3) d'un élément de cuisson revêtu (1) selon l'une quelconque des revendications 1 à 10 comprenant les étapes suivantes :
a) Chauffage de l'élément de cuisson à une température comprise entre 250°C et 350°C,
b) Désassemblage par pelage du film pelable (3) et du substrat métallique (2), le cas échéant au moyen de la languette (8) facilitant la préhension dudit film pelable (3).

13. Article culinaire (100) comprenant un élément de cuisson revêtu (1) conforme à l'une quelconque des revendications 1 à 10.

14. Article culinaire (100) selon la revendication 13 **caractérisé en ce qu'**il comporte une face de chauffe (9) destinée à être mise en contact avec une source de chauffage extérieure, la face de chauffe (9) étant opposée à la face de cuisson (5) destinée à être mise en contact avec les aliments lors de la cuisson.

15. Appareil électrique de cuisson (200) comportant un élément de cuisson revêtu (1) et une source de chauffage (210) configurée pour chauffer ledit élément de cuisson revêtu (1), **caractérisé en ce que** ledit élément de cuisson revêtu (1) est conforme à l'une des revendications 1 à 10.

## Patentansprüche

1. Beschichtetes Garelement (1) für Gargeschirr oder elektrisches Gargerät, aufweisend ein Metallsubstrat (2), das auf einer Fläche (2a) mit einer abziehbaren Folie (3) beschichtet ist, die eine Garfläche (5) bildet, wobei die abziehbare Folie (3) eine oder mehrere Schichten aus fluoriertem/n Polymer/en (7), eine mechanische Verstärkungsschicht (6) und eine Schicht aus thermisch schmelzbarem/n Polymer/en (4) umfasst, die auf der der Garfläche (5) gegenüberliegenden Seite angeordnet ist und einen Schmelzpunkt von über 250°C und unter oder gleich dem einer der anderen Schichten der abziehbaren Folie (3) hat, wobei die abziehbare Folie (3) mit dem Metallsubstrat (2) verbunden ist, wobei die Schicht aus thermisch schmelzbarem/n Polymer/en (4) mit der Fläche (2a) des Metallsubstrats (2) in Kontakt steht.

2. Beschichtetes Garelement (1) nach Anspruch 1, **dadurch gekennzeichnet, dass** die auf der der Garfläche (5) gegenüberliegenden Seite angeordnete Schicht aus thermisch schmelzbarem/n Polymer/en (4) einen Schmelzpunkt unter oder gleich dem der anderen Schichten der abziehbaren Folie (3) hat.

3. Beschichtetes Garelement (1) nach einem der vorstehenden Ansprüche, **dadurch gekennzeichnet, dass** die mechanische Verstärkungsschicht (6) eine mineralische Verstärkung, eine metallische Verstärkung oder ein nicht fluoriertes Polymer mit hohen thermomechanischen Eigenschaften umfasst.

4. Beschichtetes Garelement (1) nach Anspruch 3, **dadurch gekennzeichnet, dass** die mineralische Verstärkung aus Glasfasern, Glasfasermaterialien oder
- geweben, Kohlenstofffasern und Kohlenstofffasermaterialien oder -geweben ausgewählt ist,
oder
dass die metallische Verstärkung ein nicht kontinuierliches metallisches Element ist,
oder
dass das nicht fluorierte Polymer mit hohen thermomechanischen Eigenschaften aus den Polyaryletherketonen (PEAK) und den Polyamidimiden (PAI) ausgewählt ist.

5. Beschichtetes Garelement (1) nach Anspruch 4, **dadurch gekennzeichnet, dass** die mechanische Verstärkungsschicht (6) ferner ein Polymer umfasst, das die Verstärkung vollständig imprägniert und bedeckt.

6. Beschichtetes Garelement (1) nach einem der vorstehenden Ansprüche, **dadurch gekennzeichnet, dass** das/die thermisch schmelzende/n Polymer/e der Schicht aus thermisch schmelzbarem/n Polymer/en aus den Fluorpolymeren und den Silikonen ausgewählt ist/sind.

7. Beschichtetes Garelement (1) nach Anspruch 6, **dadurch gekennzeichnet, dass** das/die thermisch schmelzbare/n Polymer/e der Schicht aus thermisch schmelzbarem/n Polymer/en (4) aus den Copolymeren von Tetrafluorethylen und von Perfluorpropylvinylether (PFA), den Copolymeren von Tetrafluorethylen und von Hexafluorpropylen (FEP), den Copolymeren von Tetrafluorethylen und von Perfluormethylvinylether (MFA) und deren Gemischen ausgewählt sind.

8. Beschichtetes Garelement (1) nach einem der vorstehenden Ansprüche, **dadurch gekennzeichnet, dass** die abziehbare Folie (3) eine Schicht (7a) aus fluoriertem/n Polymer/en umfasst, die die Garfläche (5) bildet.

9. Beschichtetes Garelement (1) nach einem der vorstehenden Ansprüche, **dadurch gekennzeichnet, dass** das fluorierte Polymer oder das Gemisch aus fluorierten Polymeren der Schicht aus fluoriertem/n Polymer/en (7) der abziehbaren Folie (3) aus der Gruppe ausgewählt ist, die Polytetrafluorethylen (PTFE), die Copolymere von Tetrafluorethylen und von Polymethylvinylether (MVA), die Terpolymere von Tetrafluorethylen, von Polymethylvinylether und von Fluoralkylvinylether (TFE/PMVE/FAVE) und deren Gemischen umfasst.

10. Beschichtetes Garelement (1) nach einem der vorstehenden Ansprüche, **dadurch gekennzeichnet, dass** sich die abziehbare Folie (3) in einer Lasche (8) fortsetzt, die nicht mit dem Metallsubstrat (2) verbunden ist, wobei die Lasche (8) das Ergreifen der abziehbaren Folie (3) für den Trennvorgang durch Abziehen erleichtert.

11. Verfahren zur Herstellung eines beschichteten Garelements (1) nach einem der vorstehenden Ansprüche, das die folgenden Schritte umfasst:
i. Bereitstellen eines Metallsubstrats (2),
ii. gegebenenfalls Vorbehandeln der zu beschichtenden Fläche (2a) des Metallsubstrats (2),
iii. Bereitstellen einer abziehbaren Folie (3), die eine oder mehrere Schichten aus fluoriertem/n Polymer/en (7), eine mechanische Verstärkungsschicht (6) und eine Schicht aus thermisch schmelzbarem/n Polymer/en (4) umfasst,
iv. Positionieren der Schicht aus thermisch schmelzbarem/n Polymer/en (4) der abziehbaren Folie (3) auf der Fläche (2a) des Metallsubstrats (2),
v. Verbinden des Metallsubstrats (2) und der Schicht aus thermisch schmelzbarem/n Polymer/en (4) der abziehbaren Folie (3) durch Heißpressen.

12. Verfahren zum Abziehen der abziehbaren Folie (3) von einem beschichteten Garelement (1) nach einem der Ansprüche 1 bis 10, umfassend die folgenden Schritte:
a) Erhitzen des Garelements auf eine Temperatur zwischen 250°C und 350°C,
b) Trennen der abziehbaren Folie (3) und des Metallsubstrats (2), gegebenenfalls unter Verwendung der Lasche (8), die das Ergreifen der abziehbaren Folie (3) erleichtert, durch Abziehen.

13. Gargeschirr (100), das ein beschichtetes Garelement (1) nach einem der Ansprüche 1 bis 10 umfasst.

14. Gargeschirr (100) nach Anspruch 13, **dadurch gekennzeichnet, dass** es eine Heizfläche (9) aufweist, die dazu bestimmt ist, mit einer externen Heizquelle in Kontakt gebracht zu werden, wobei die Heizfläche (9) der Garfläche (5) gegenüberliegt, die dazu bestimmt ist, beim Garen mit den Lebensmitteln in Kontakt zu kommen.

15. Elektrisches Gargerät (200), das ein beschichteten Garelement (1) und eine Heizquelle (210) umfasst, die zum Erhitzen des beschichteten Garelements (1) ausgelegt ist, **dadurch gekennzeichnet, dass** das beschichtete Garelement (1) nach einem der Ansprüche 1 bis 10 ist.

## Claims

1. A coated cooking element (1) for a culinary item or electric cooking apparatus, comprising a metal substrate (2) coated on one face (2a) with a peelable film (3), forming a cooking face (5), the peelable film (3) comprising one or more layers of fluorinated polymer (7), a mechanical reinforcing layer (6) and a layer of hotmelt polymer(s) (4) arranged on the opposite side to the cooking face (5) and having a melting point higher than 250°C and lower than or equal to that of at least one of the other layers of the peelable film (3), said peelable film (3) being assembled with the metal substrate (2), said layer of hotmelt polymer(s) (4) being in contact with the face (2a) of the metal substrate (2).

2. The coated cooking element (1) according to claim 1, **characterised in that** the layer of hotmelt polymer(s) (4) arranged on the opposite side to the cooking face (5) has a melting point lower than that of the other layers of the peelable film (3).

3. The coated cooking element (1) according to any one of the preceding claims, **characterised in that** the mechanical reinforcement layer (6) comprises a mineral reinforcement, metallic reinforcement or a non-fluorinated polymer with high thermal and mechanical properties.

4. The coated cooking element (1) according to claim 3, **characterised in that** the mineral reinforcement is chosen from glass fibres, glass-fibre materials or fabrics, carbon fibres and carbon-fibre materials or fabrics,
or
**in that** the metallic reinforcement is a non-continuous metal element,
or
**in that** the non-fluorinated polymer with high thermomechanical properties is chosen from the polyaryletherketones (PEAK) and polyamide-imides (PAI).

5. The coated cooking element (1) according to claim 4, **characterised in that** the mechanical reinforcement layer (6) further comprises a polymer, impregnating and completely covering said reinforcement.

6. The coated cooking element (1) according to any one of the preceding claims, **characterised in that** the hotmelt polymer(s) of the layer of hotmelt polymer(s) (4) are chosen from fluoropolymers and silicones.

7. The coated cooking element (1) according to claim 6, **characterised in that** the hotmelt polymer(s) of the layer of hotmelt polymer(s) (4) are chosen from copolymers of tetrafluoroethylene and perfluoropropylvinylether (PFA), copolymers of tetrafluoroethylene and hexafluoropropylene (FEP), copolymers of tetrafluoroethylene and perfluoromethylvinylether (MFA), and the mixtures thereof.

8. The coated cooking element (1) according to any one of the preceding claims, **characterised in that** said peelable film (3) comprises a layer (7a) of fluorinated polymer(s) forming the cooking face (5).

9. The coated cooking element (1) according to any one of the preceding claims, **characterised in that** the fluorinated polymer or the mixture of fluorinated polymers of the one or more layers of fluorinated polymer(s) (7) of said peelable film (3) is chosen from the group comprising polytetrafluoroethylene (PTFE), the copolymers of tetrafluoroethylene and polymethylvinylether (MVA), the terpolymers of tetrafluoroethylene, polymethylvinylether and fluoroalkylvinylether (TFE/PMVE/FAVE), and the mixtures thereof.

10. The coated cooking element (1) according to any one of the preceding claims, **characterised in that** the peelable film (3) is extended by a tab (8) that is not associated with the metal substrate (2), said tab (8) facilitating the gripping of said peelable film (3) for the operation of disassembly by peeling.

11. A method for manufacturing a coated cooking element (1) according to any one of the preceding claims comprising the following steps:
i. Supplying a metal substrate (2),
ii. Optionally, prior treatment of the face (2a) of said metal substrate (2) intended to be coated,
iii. Supplying a peelable film (3) comprising one or more layers of fluorinated polymer(s) (7), a mechanical reinforcement layer (6) and a layer of hotmelt polymer(s) (4),
iv. Positioning the layer of hotmelt polymer(s) (4) of the peelable film (3) on the face (2a) of the metal substrate (2),
v. Performing the assembly of said metal substrate (2) and the layer of hotmelt polymer(s) (4) of the peelable film (3) by hot pressing.

12. A method for peeling the peelable film (3) of a coated cooking element (1) according to any one of claims 1 to 10, comprising the following steps:
a) Heating the cooking element to a temperature between 250°C and 350°C,
b) Disassembling by peeling the peelable film (3) and the metal substrate (2), where applicable by means of the tab (8) facilitating the gripping of said peelable film (3).

13. A culinary item (100) comprising a coated cooking element (1) according to any one of claims 1 to 10.

14. The culinary item (100) according to claim 13, **characterised in that** it comprises a heating face (9) intended to be placed in contact with an external heating source, the heating face (9) being opposite the cooking face (5) intended to be placed in contact with foods during cooking.

15. An electric cooking appliance (200) comprising a coated cooking element (1) and a heat source (210) configured to heat said coated cooking element (1), **characterised in that** said coated cooking element (1) is according to one of claims 1 to 10.
